# EUROPÄISCHE PATENTANMELDUNG

(11) **EP 1 291 617 A1**
(43) Veröffentlichungstag der Anmeldung: **12.03.2003**
(21) Anmeldenummer: 02019510.3
(22) Anmeldetag: 31.08.2002
(51) Int. Cl.: G01C 11/02, G01C 21/16, G01C 25/00

(54) **Verfahren und Anordnung zum Bestimmen der Position und Ausrichtung einer Bildaufnahme-Einrichtung beim optischen Vermessen von Objekten**

(30) Priorität: 06.09.2001 DE 10143539
(71) Anmelder: DaimlerChrysler AG, 70567 Stuttgart (DE)
(72) Erfinder: Pollak, Bernd, Dr., 71263 Weil der Stadt (DE)

(57) **Zusammenfassung**

Die Erfindung betrifft ein Verfahren und eine Anordnung zum Bestimmen der Position und Ausrichtung (Orientierung) einer Bildaufnahme-Einrichtung beim optischen Vermessen von Objekten. Die Erfindung besteht darin, dass die Bildaufnahme-Einrichtung (12) zusammen mit einem Trägheitsnavigationssystem (13) relativ zu einem Objekt (11) in Messposition gebracht wird, dass die Signale des Trägheitsnavigationssystems (13) einer Auswerteeinrichtung (1) zugeführt werden und dass in der Auswerteeinrichtung (1) aus den Signalen die Koordinaten der Bildaufnahme-Einrichtung (12) zum Zeitpunkt der Bildaufnahme in einem Bezugskoordinatensystem errechnet werden.

## Beschreibung

Die Erfindung betrifft ein Verfahren und eine Anordnung zum Bestimmen der Position und Ausrichtung bzw. Orientierung einer Bildaufnahme-Einrichtung beim optischen Vermessen von Objekten nach den Oberbegriffen der Ansprüche 1 und 5.

Beim photogrammetrischen Vermessen von Objekten im Nahbereich wird aus Bildern , die das Objekt aus verschiedenen Perspektiven wiedergeben, auf dessen Abmessungen geschlossen. Hierzu werden die Bilddaten in einem Rechner verarbeitet. Die Grundlage der Koordinatenberechnung ist die Bestimmung der Kameraorientierungen der beteiligten Bilder. Es sind verschiedene Verfahren und Anordnungen zur Orientierungsbestimmung von Kameras bekannt.

Eine erste Möglichkeit besteht in der Orientierungsbestimmung durch rechnerische Verfahren auf der Grundlage von Bildmessungen. Diese Verfahren verwenden teilweise Startwerte für die Orientierung, deren Bestimmung zeitaufwendig und nicht immer eindeutig sind. Z.B. sind photogrammetrische Verfahren bekannt, die die räumliche Orientierung einer Kamera relativ zu mehreren sichtbaren Referenzpunkten bestimmen, deren absolute Koordinaten bekannt sind. Ebenso sind photogrammetrische Bündelausgleich-Verfahren bekannt, die mehrere räumliche Orientierungen einer Kamera relativ zueinander bestimmen können, sofern die aus mehreren Richtungen aufgenommenen Bilder mehrere gemeinsame Punkte enthalten, deren Koordinaten nicht vorher bekannt sein müssen. Bei diesen Verfahren werden zusätzlich zu den Orientierungen der Kamera auch die Koordinaten der in mehreren Bildern sichtbaren Punkte berechnet.

Bei dem in DE 195 36 294 A1 beschriebenen Verfahren zur geometrischen Navigation von optischen 3D-Sensoren zum dreidimensionalen Vermessen von Objekten wird eine zusätzliche Kamera verwendet, aus deren Signalen Positionsmesswerte der 3D-Sensoren abgeleitet werden. Bei Verwendung eines 3D-Sensors mit mehreren Kameras werden die Positionsmesswerte durch eine mechanisch starre Verbindung derselben untereinander oder durch eine relative Orientierungsbestimmung gewonnen.

Bei der Luftbildphotogrammetrie ist es bekannt, mit Hilfe eines GPS-Systems die Daten für die Position einer Kamera zu gewinnen. Wegen der notwendigen "Sichtverbindung" zu den Satelliten sind derartige Verfahren bei der industriellen Nahbereichsphotogrammetrie nicht anwendbar.

In DE 40 26 942 A1 ist ein Verfahren zur berührungslosen Vermessung von Objektoberflächen beschrieben, bei dem ein Objekt mit einer Videokamera aus unterschiedlichen Positionen heraus aufgenommen wird. Die Videokamera ist an einem Dreh/Schwenkgelenk eines Messarmes eines Koordinatenmessgerätes befestigt. Die Bilder werden gespeichert und in Bezug auf die Koordinaten charakteristischer Punkte der Objektoberfläche nach dem aus der Photogrammetrie bekannten Verfahren des räumlichen Vorwärtseinschnittes ausgewertet. Die von den Maßstäben des Koordinatenmeßgerätes gelieferten Positionsmesswerte und vom Dreh/Schwenkgelenk gelieferten Winkelmesswerte werden zur Bestimmung der Kameraorientierung herangezogen. Ein derartiges Verfahren gestattet nur die Vermessung solcher Objekte, die in den Positionierbereich des Messarmes passen. Die Bestimmung der Positionsmesswerte und Winkelmesswerte ist aufwendig.

Bei einem in DE 195 44 240 A1 beschriebenen Verfahren und einer Vorrichtung zur Ermittlung der räumlichen Koordinaten von Objektpunkten einer Karosserie wird ein die Karosserie mechanisch berührend abtastender Sensor verwendet, der entlang von Geradführungen positionierbar ist. Die Sensorposition ist stets zu Zentriermitteln an der Halterung der Karosserie im Messaufbau genau bestimmt, weil die Führungen einen festen mechanischen Bezug zu den Zentriermitteln besitzen.

Es ist Aufgabe der Erfindung ein Verfahren und eine Vorrichtung zum Bestimmen der Position und Ausrichtung einer Bildaufnahme-Einrichtung beim optischen Vermessen von Objekten zu entwickeln, die mit geringem Material- und Kostenaufwand eine genaue Messung und flexible Anpassung an die Messobjektgröße ermöglichen.

Die Aufgabe wird mit einem Verfahren und einer Vorrichtung gelöst, welche die Merkmale nach Anspruch 1 und 5 aufweist. Vorteilhafte Ausgestaltungen ergeben sich aus den Unteransprüchen.

Durch die Montage eines Trägheitsnavigationssystems an einer Bildaufnahme-Einrichtung und das Registrieren aller Translationen und Rotationen während eines photogrammetrischen Aufnahmevorganges eines Objektes kann die Orientierung der Bildaufnahme-Einrichtung zum Aufnahmezeitpunkt berechnet werden. Der Aufnahmezeitpunkt kann mittels eines Signals eines Blitzlicht-Synchronkontaktes vorgegeben werden. Des weiteren kann eine vorgegebene Position und Ausrichtung einer Bildaufnahme-Einrichtung mit Hilfe des Trägheitsnavigationssystems eingenommen werden.

Das Grundprinzip, welches dem Trägheitsnavigationssystem zugrunde liegt, beruht auf der Tatsache, dass auf einen beschleunigten Sensor eine Kraft wirkt. Diese Kraft ist proportional zur Beschleunigung des Sensors. Mit Hilfe des Trägheitsnavigationssystems wird laufend die Kraft, die auf die Sensoren wirkt, gemessen. Aus den Kraftmesswerten ergibt sich die Beschleunigung, und durch Integration bzw. zweifache Integration die Geschwindigkeit bzw. der zurückgelegte Weg der Sensoren. Ist die Bildaufnahme-Einrichtung starr mit den Sensoren verbunden, entsprechen die an den Sensoren gemessenen Beschleunigungen denen an der Bildaufnahme-Einrichtung. Die Bestimmung der Beschleunigung und damit des zurückgelegten Weges wird in allen drei Koordinatenrichtungen eines Bezugskoordinatensystems vorgenommen. Neben der Position der Bildaufnahme-Einrichtung im Bezugskoordinatensystem wird die Orientierung oder Ausrichtung im Bezugskoordinatensystem ebenfalls vom Trägheitsnavigationssystem bestimmt.

Die Zeit für die Berechnung der Orientierung kann gegenüber herkömmlichen Verfahren reduziert werden., wobei die errechnete Orientierung immer eindeutig ist. Die Orientierung der Bildaufnahme-Einrichtung kann bei hoher Genauigkeit in Form von zusätzlichen Beobachtungen in eine anschließende Bündelblockausgleichung eingeführt werden, was zu einer Stabilisierung der Blockgeometrie und zu einer Verringerung der erforderlichen Anzahl von Verknüpfungsbeobachtungen führt. Im günstigsten Fall kann gänzlich auf Verknüpfungsbeobachtungen von Verknüpfungspunkten verzichtet werden. Ein Anwender kann bei der Aufnahme geführt werden, indem ihm die Werte für die Position und Ausrichtung der Bildaufnahme-Einrichtung, z.B. entsprechend einer photogrammetrischen Planung, zugeführt werden.

Um zeit- und bewegungsabhängige Drifteffekte kompensieren zu können, kann die Bildaufnahme-Einrichtung in regelmäßigen, von der jeweiligen Aufgabe abhängigen Zeitabständen in eine Referenzposition gebracht werden. Es können mehrere, räumlich verteilte Referenzpositionen verwendet werden, welche zuvor relativ zueinander bezüglich des Bezugskoordinatensystems eingemessen wurden. Wird nur eine Referenzposition verwendet, dann kann diese frei im Arbeitsbereich der Bildaufnahme-Einrichtung platziert werden, wobei sie während der gesamten Dauer des Messvorganges stabil beibehalten bleibt.

Die Erfindung soll anhand von Ausführungsbeispielen noch näher erläutert werden, es zeigen:
Fig. 1: ein Schema einer photogrammetrischen Anordnung,
Fig. 2: ein Flussschema eines Photogrammetrieprozesses mit Bündelblockausgleichung, und
Fig. 3: ein Flussschema eines Photogrammetrieprozesses mit direkter Punktbestimmung.

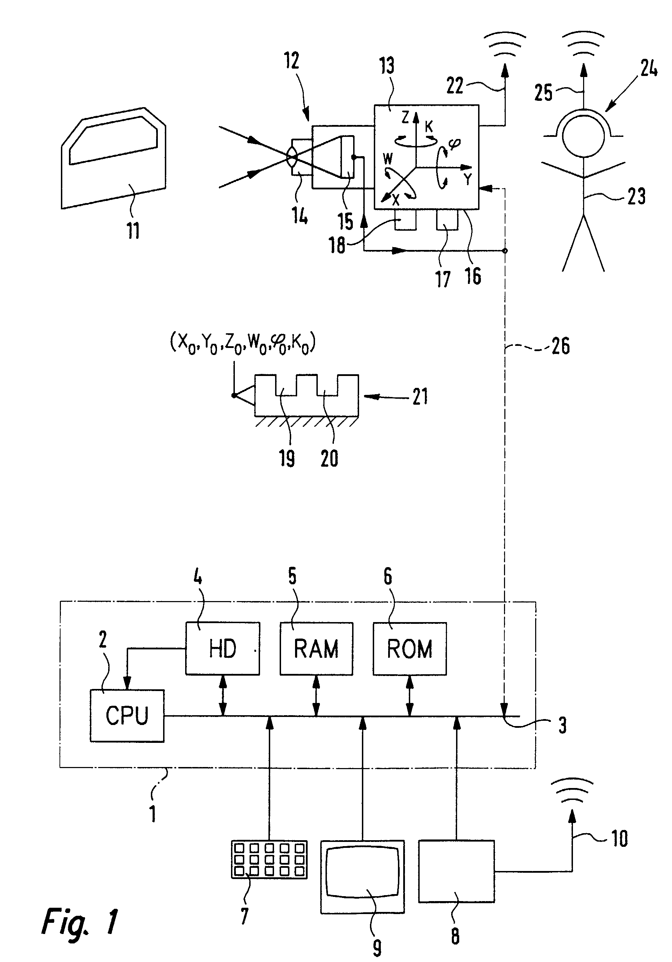

Fig. 1 zeigt ein Schema einer photogrammetrischen Anordnung zum optischen 3D-Vermessen eines beliebigen Werkstückes oder Werkzeuges. Die Anordnung enthält einen für Bildverarbeitung geeigneten Rechner 1 mit einem Zentralprozessor 2 (CPU), der über ein Bussystem 3 mit einem Festplattenlaufwerk 4 (HD), einem wahlfreien Zugriffsspeicher 5 (RAM) und einem Nur-Lese-Speicher 6 (ROM) verbunden ist. Von außerhalb sind mit dem Bussystem 3 eine Tastatur 7, eine Funkempfangs- und Sendestation 8 und ein Bildschirm 9 verbunden. Die Funkempfangs- und Sendestation 8 ist mit einer Antenne 10 ausgestattet. Zum Erzeugen von ein Karosserieteil 11 wiedergebenden Bilddaten ist eine Kamera 12 vorgesehen, die fest mit einem Trägheitsnavigationssystem 13 gekoppelt ist. Zur Stromversorgung der Kamera 12 und des Trägheitsnavigationssystems 13 dient ein Akkumulator. Ein Objektiv 14 der Kamera 12 ist auf das Karosserieteil 11 gerichtet. Ein Bildsensor 15 ist Bestandteil der Kamera 12. Das Trägheitsnavigationssystem 13 besitzt an seinem Gehäuse 16 Positionierelemente 17, 18, die mit Positionierelementen 19, 20 an einer Referenzstation 21 korrespondieren. Am Trägheitsnavigationssystem 13 ist eine weitere Antenne 22 befestigt. Die Kamera 12 ist zusammen mit dem Trägheitsnavigationssystem 13 von einer Bedienperson 23 in einem Bezugskoordinatensystem (x, y, z) positionierbar. Die Bedienperson 23 ist mit einer Empfangseinheit 24 ausgestattet, wozu eine weitere Antenne 25 gehört. Die Kamera 12 und das Trägheitsnavigationssystem 13 können bei Bedarf über ein gestrichelt dargestelltes Kabel 26 mit dem Bussystem 3 verbunden werden.

Der Zentralprozessor 2 dient zur zeitlichen Abstimmung und Kontrolle aller an das Bussystem 3 angeschlossenen Elemente. Der wahlfreie Zugriffsspeicher 5 dient zur Ablage von temporären Anweisungen oder Daten. Der Nur-Lese-Speicher 6 enthält unveränderliche Befehle, Daten und Programme, die für die korrekte Funktionsweise des Rechners 1 erforderlich sind. Die Festplatte 4 ist ein Speicher mit großer Kapazität, um ein Programm und Daten bei der Durchführung des Verfahrens zu speichern. Mit der Funkempfangs- und Sendestation 8 und der Antenne 10 können Bilddaten und Positionsdaten der Kamera 12 empfangen werden und Steuerdaten für die Kamera 12 und das Trägheitsnavigationssystem 13 ausgesendet werden. Dieser Datenaustausch geschieht über die Antenne am Trägheitsnavigationssystem 13, in das ebenfalls eine nicht dargestellte Funkempfangs- und Sendestation integriert ist. Alternativ kann der Datenaustausch über das Kabel 26 vorgenommen werden. Die Tastatur 8 ermöglicht die Dateneingabe durch die Bedienperson 23. Zur Ausgabe von Daten für die Bedienperson 23 dient der Bildschirm 9. Über die Funkverbindung zwischen der Funkempfangs- und Sendestation 8 und der Empfangseinheit 24 können der Bedienperson 23 Handlungsanweisungen für die Positionierung und Ausrichtung der Kamera 12 gegeben werden.

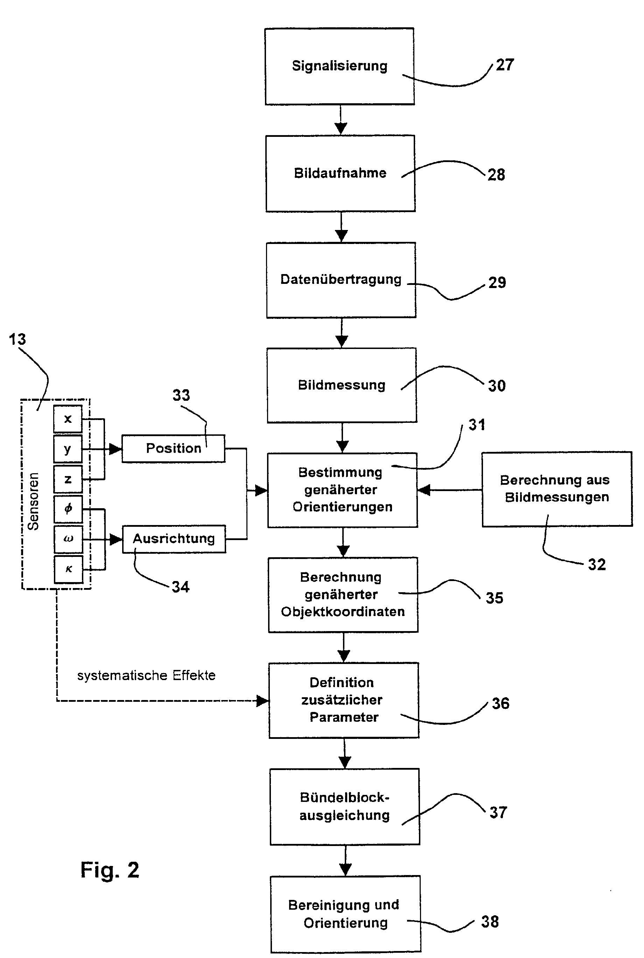

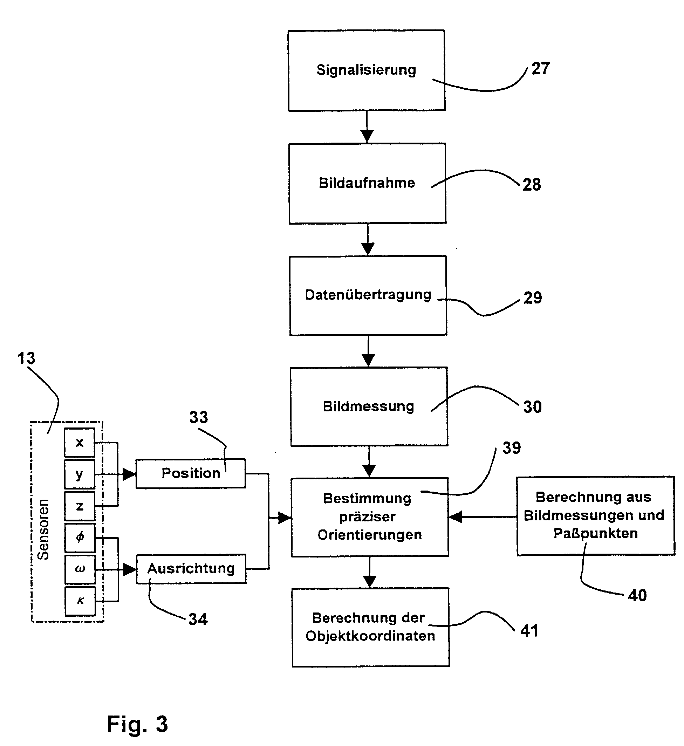

Im folgenden soll die Durchführung des Verfahrens anhand der Fig. 2 und 3 näher erläutert werden.

Bei dem in Fig. 2 dargestellten Ablaufplan eines exemplarischen Photogrammetrieprozesses wird in einem ersten Signalisierungs-Schritt 27 das zu vermessende Karosserieteil 11 beleuchtet und ggf. markiert. Dies kann kontinuierlich oder mittels Stroboskop-Beleuchtung geschehen. Bei Bedarf können Marken auf das Karosserieteil 11 projiziert oder daran mechanisch befestigt werden und polarisiertes Licht verwendet werden.

In einem zweiten Bildaufnahme-Schritt 28 wird mit Hilfe des Objektives 14 das von dem Karosserieteil 11 ausgehende Licht auf den Bildsensor 15 geleitet. Als Bildsensor 15 eignet sich ein Festkörper-Bildwandler, insbesondere ein ladungsgekoppelter Wandler (CCD).

In einem nächsten Schritt 29 werden die Bilddaten von der Kamera 12 zum Rechner 1 übertragen. Dies kann über die Funkschnittstelle aus den Antennen 10, 22 und der Funkempfangsund Sendestation 8 oder über das Kabel 26 geschehen.

In einem nächsten Schritt 30 wird eine Bildmessung mit Hilfe des Rechners 1 vorgenommen. Bei dem Rechner 1 handelt es sich um einen für digitale Bildverarbeitung geeignet ausgestatteten Rechner. Das in den Rechner 1 geladene Programm für die Bildmessung erlaubt die Abarbeitung von in der Photogrammetrie üblichen Verfahren, wie Bildvorverarbeitungen mit Steuerung des Bildeinzuges, Bildverbesserung und Bildmanipulation, Bildfilterungen oder Bildsegmentationen. Im Ergebnis des Berechnungs-Schrittes 30 liegen 2D-Meßwerte zur Form und zu den Abmessungen des Karosserieteils 11 vor.

In einem weiteren Schritt 31 werden genäherte Bildorientierungen bestimmt. Hierzu werden Daten aus einem Berechnungs-Schritt 32 oder Daten 33, 34 zur Position und Lage der Kamera 12 verwendet. Im Berechnungs-Schritt 32 werden die Ergebnisse des Berechnungs-Schrittes 30 verwendet. Die Daten 33, 34 zur Position und zur Lage der Kamera 12 werden mit dem Trägheitsnavigationssystem 13 bestimmt und über die Funkschnittstelle zu dem Rechner 1 übertragen. Alternativ können diese Daten über das Kabel 26 übertragen werden. Im Trägheitsnavigationssystem 13 befinden sich Sensoren, die Daten zu den sechs Freiheitsgraden x, y, z, ϕ, ω, κ geben. x, y und z enthalten die Verschiebungen in einem durch ein kartesisches Koordinatensystem X, Y, Z aufgespannten Raum und ϕ, ω, κ repräsentieren die Rotationen bezüglich der Koordinaten-Achsen X,Y,Z jeweils bezüglich der Position und Ausrichtung zur Referenzstation 21 mit den Referenzwerten x₀, y₀, z₀, ϕ₀, ω₀, κ₀.

In einem nächsten Schritt 35 werden durch die Verarbeitung der Daten aus dem Schritt 31 genäherte 3D-Koordinaten zum Karosserieteil 11 bestimmt.

In einem weiteren Schritt 36 werden zur Korrektur bekannter systematischer Effekte zusätzliche Parameter definiert. Damit kann eine Kalibrierung der Kamera 12 und des Trägheitsnavigationssystems 13 vorgenommen werden. Beispielsweise unterliegt das Trägheitsnavigationssystems 13, insbesondere die für die Wegberechnung verwendeten Beschleunigungssensoren, äußeren Störeinflüssen. Der größte Störeinfluß ist die Erdbeschleunigung, die zu einem ungünstigen Signal-Rausch-Verhältnis führt. Da die Positions- und Lagebestimmung der Kamera 12 relativ zur Referenzstation 21 geschieht, indem alle Änderungen von Position und Lage aufsummiert werden, akkumulieren sich auch die dabei auftretenden Fehler. D.h., lokale Abweichungen sind gering, aber die Abweichungen über eine Vielzahl von Messungen sind nicht mehr zu vernachlässigen. Diese Fehler treten in Form von Drift der Messwerte des Trägheitsnavigationssystems 13 in Erscheinung.

Die im Schritt 36 definierten zusätzlichen Parameter, gehen in einen Bündelblockausgleichungs-Schritt 37 ein. Die photogrammetrische Auswertung der Bildsignale beruht auf dem Abbildungsprinzip der Zentralprojektion. Die Rekonstruktion des aufgenommenen Karosserieteiles 11 geschieht durch die Verknüpfung von Bildstrahlen, die den gemessenen Punkt im Bild, das Projektionszentrum des Bildes und den zugehörigen Objektpunkt miteinander verbinden. Jedes Bild besitzt viele solcher Messstrahlen, die im Projektionszentrum gebündelt sind. Damit stellt jedes Messbild ein Strahlenbündel dar. Zwei Bilder sind miteinander verknüpft, wenn sie Bildstrahlen zu gemeinsamen Punkten am Karosserieteil 11 besitzen.

Objektpunkte, die ausschließlich die Funktion haben, Bilder miteinander zu verknüpfen, ohne dabei für die eigentliche Messung relevant zu sein, sind Verknüpfungspunkte. Durch Verknüpfungsbeobachtungen werden die Verknüpfungspunkte gemessen. Mehrere miteinander verknüpfte Bilder ergeben einen Bildverband oder einen Bildblock. Die räumliche Anordnung der Aufnahmeorte der Bilder und auch deren Aufnahmerichtung, sowie die Anordnung von Referenzinformationen, wie Maßstäbe oder Referenzpunkte am Karosserieteil 11, bilden eine Anordnungsgeometrie oder auch eine Blockgeometrie. Sind die Bilder so miteinander verknüpft, dass die Objekt- bzw. Verknüpfungspunkte jeweils in mehr als zwei Bildern erscheinen, was den Regelfall darstellt, dann existieren mehr Messungen, als für eine direkte Auswertung erforderlich sind. Es ergibt sich ein überbestimmtes System, in dem aus allen Messwerten durch eine Ausgleichung die optimalen Objektkoordinaten berechnet werden. Eine einfache Ausgleichung wäre z.B. die Mittelung aller Ergebnisse einer mehrfach gemessenen Strecke. Die Bündelblockausgleichung integriert alle an der photogrammetrischen Aufnahme beteiligten Messungen bzw. Beobachtungen. In die Bündelblockausgleichung gemäß Schritt 37 können auch Werte als Beobachtungen eingehen, die z. B. mittels einer Koordinatenmessmaschine bereits am Karosserieteil 11 vorbestimmt wurden. Da es sich dabei um nicht zwangsläufig für die Auswertung notwendige Messungen handelt, werden sie als zusätzliche Beobachtungen bei der Auswertung berücksichtigt. Als weitere zusätzliche Beobachtungen können auch die Systemparameter der Kamera 12 eingehen, wenn Meßwerte oder kalibrierte Werte für sie vorliegen. Andernfalls werden sie als zusätzliche Parameter (Unbekannte) eingeführt. Die systematischen Effekte des Trägheitsnavigationssystems 13, wie sie im Schritt 36 definiert wurden, gehen ebenfalls als zusätzliche Parameter in die Bündelblockausgleichung ein.

In einem letzten Schritt 38 werden die im Schritt 37 bestimmten Objektkoordinaten bereinigt und optimiert. Das Endergebnis der Vermessung des Karosserieteils 11 wird in dem Festplattenlaufwerk 4 gespeichert und auf dem Bildschirm 9 dargestellt.

Das an der Kamera 12 montierte Trägheitsnavigationssystem 13 registriert alle eigenen Bewegungen der Kamera 12 und berechnet daraus laufend die aktuelle Position und Ausrichtung. Wenn ein neues, geplantes Bild von dem Karosserieteil 11 aufgenommen werden soll, dann kann eine Differenz aus der aktuellen und einer neuen Position und Ausrichtung errechnet werden. Die Differenz kann der Bedienperson angezeigt werden. Die Bedienperson kann durch kontinuierliches Aktualisieren zu dem gewünschten Ort geführt werden. Hierzu kann die Bedienperson 23 über die Funkschnittstelle über die Antenne 25 und die Empfangseinheit 24 Informationen vom Rechner 1 erhalten.

In Fig. 3 ist schematisch ein weiterer Photogrammetrieprozessablauf dargestellt. Schritte mit äquivalenter Funktion besitzen die in der Beschreibung zu Figur 2 benutzten Bezugszeichen und werden nachstehend nicht nochmals näher erläutert. Im Unterschied zum Ablauf gemäß Fig. 2 wird nach dem Schritt 30 der Bildmessung in einem Schritt 39 eine präzise Bestimmung der Bildorientierung vorgenommen. Hierzu werden entweder die mit dem Trägheitsnavigationssystems 13 ermittelten Daten 33, 34 zur Position und Ausrichtung der Kamera 12 oder die in einem Schritt 40 mit einem Rückwärtsschnitt erhaltenen Orientierungsberechnungen aus Bildmessungen und Passpunkten verwendet. In einem abschließenden Schritt 41 werden die Objektkoordinaten des Karosserieteils 11 direkt mit einem Vorwärtsschnitt berechnet

### Liste der verwendeten Bezugszeichen

- 1: Rechner
- 2: Zentralprozessor
- 3: Bussystem
- 4: Festplattenlaufwerk
- 5: Zugriffsspeicher
- 6: Nur-Lese-Speicher
- 7: Tastatur
- 8: Funkempfangs- und Sendestation
- 9: Bildschirm
- 10: Antenne
- 11: Karosserieteil
- 12: Kamera
- 13: Trägheitsnavigationssystem
- 14: Objektiv
- 15: Bildsensor
- 16: Gehäuse
- 17: -20 Positionierelement
- 21: Referenzstation
- 22: Antenne
- 23: Bedienperson
- 24: Empfangseinheit
- 25: Antenne
- 26: Kabel
- 27: -41 Schritt

## Patentansprüche

1. Verfahren zum Bestimmen der Position und Ausrichtung einer Bildaufnahme-Einrichtung beim optischen Vermessen von Objekten, **dadurch gekennzeichnet,**
**dass** die Bildaufnahme-Einrichtung (12) zusammen mit einem Trägheitsnavigationssystem (13) relativ zum Objekt (11) in Messposition gebracht wird,
**dass** die Signale des Trägheitsnavigationssystems (13) einer Auswerteeinrichtung (1) zugeführt werden,
**dass** in der Auswerteeinrichtung (1) aus den Signalen die Koordinaten der Bildaufnahme-Einrichtung (12) zum Zeitpunkt der Bildaufnahme in einem Bezugskoordinatensystem errechnet werden.

2. Verfahren nach Anspruch 1, **dadurch gekennzeichnet,**
**dass** zur Berechnung der Orientierung der Bildaufnahme-Einrichtung (12) mit dem Trägheitsnavigationssystem (13) die Translationen und Rotationen der Bildaufnahme-Einrichtung (12) berechnet werden.

3. Verfahren nach Anspruch 1, **dadurch gekennzeichnet,**
**dass** zur Kompensation von Drifteffekten die Anordnung aus Bildaufnahme-Einrichtung (12) und Trägheitsnavigationssystem (13) zu vorgegebenen Zeitpunkten in eine Referenzposition (21) im Bezugskoordinatensystem gebracht wird.

4. Verfahren nach Anspruch 1, **dadurch gekennzeichnet,**
**dass** zum Führen der Bildaufnahme-Einrichtung (12) relativ zum Objekt (11) die Orientierungsdaten der Bildaufnahme-Einrichtung (12) einem Bediener (23) übermittelt werden.

5. Anordnung zum Bestimmen der Position und Ausrichtung einer Bildaufnahme-Einrichtung beim optischen Vermessen von Objekten, **dadurch gekennzeichnet,**
**dass** die Bildaufnahme-Einrichtung (12) bewegungsmäßig mit einem Trägheitsnavigationssystem (13) gekoppelt ist.

6. Anordnung nach Anspruch 5, **dadurch gekennzeichnet,**
**dass** das Trägheitsnavigationssystem (13) eine portable Stromversorgung enthält.

7. Anordnung nach Anspruch 5, **dadurch gekennzeichnet,**
**dass** das Trägheitsnavigationssystem (13) eine Einrichtung (22) zur drahtlosen Übertragung, insbesondere zur Funkdatenübertragung, von Signalen zur einer ortsfesten Auswerteeinrichtung (10, 8, 1) enthält.
